# EUROPEAN PATENT SPECIFICATION

(11) **EP 0 703 037 B1**
(45) Date of publication and mention of the grant of the patent: **28.11.2001**
(21) Application number: 95306426.8
(22) Date of filing: 13.09.1995
(51) Int. Cl.: B23P 19/06

(54) **Apparatus for continuously feeding and driving clinching nuts**
Gerät zum kontinuierlichen Fördern und Setzen von vernichtbaren Muttern
Appareil pour alimenter en continu et mettre en place des écrous rivets

(30) Priority: 26.09.1994 JP 22927594
(43) Date of publication of application: 27.03.1996
(73) Proprietor: AOYAMA SEISAKUSHO CO., LTD., Niwa-gun, Aichi-ken (JP)
(72) Inventor: Kajino, Hiroshi, c/o Aoyama Seisakusho Co. Ltd., Niwa-gun, Aichi-ken (JP); Mizuno, Kozo, c/o Aoyama Seisakusho Co. Ltd., Niwa-gun, Aichi-ken (JP)
(74) Representative: Watkins, David

(56) References cited:
- EP-A- 0 536 779
- EP-A- 0 579 474
- FR-A- 2 622 261
- US-A- 4 164 072
- US-A- 4 178 662

## Description

### BACKGROUND OF THE INVENTION

This invention relates to an apparatus for continuously driving clinching nuts, in which a member to be clinched is punched by a clinching nut and the clinching nut is clinched in a punched hole.

As an apparatus by which clinching is carried out on the heels of feeding clinching nuts arranged by a nut feeder to a position of a member to be clinched, by using a chute, there has been known, for example, an apparatus disclosed in Japanese Provisional Patent Publication No. 259780/1987. However, in the above apparatus, delivery is carried out in such a manner that clinching nuts are entirely charged in a chute, so that there are problems that it is difficult to make a layout by bending the chute freely, and an installation area of the apparatus cannot be utilized efficiently because arrangement of a clinching device and a nut feeder is limited.

European Patent Application No. 0 536 779 discloses a continuous parts feeder similar to the above-described arrangement in which a parts transfer pipe is maintained closely packed with parts. The feeder has at least two magazines which are charged with the parts to be fed and includes a switching mechanism for switching the parts transfer pipe from a spent magazine to a full magazine, thereby ensuring that the parts transfer pipe is always fully loaded.

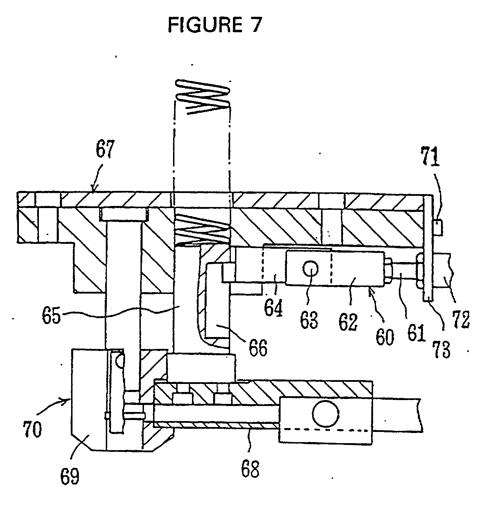

As shown in the prior art arrangement depicted in Fig. 7, in a clinching device comprising a punch holder and a driving head, a lock pin 64 is rotatably mounted by a pin 63 on a knuckle 62 connected to a cylinder rod 61 of a locking mechanism 60 , and the lock pin 64 is engaged with a groove 66 of a guide post 65, whereby a sliding amount of a driving head 70 is controlled. Therefore, when clinching failure occurs, a next clinching nut is fed to a nose piece 69 from a waiting chute 68, and two clinching nuts are driven. Thereby the nose piece 69 is damaged, it is necessary to exchange the damaged nose piece 69 directly while the driving head 70 is installed to the clinching device, or exchange the damaged nose piece 69 after the driving head 70 is removed from the clinching device. However, in the exchange operation carried out while the driving head 70 is fitted to the clinching device, a space where the exchange operation is carried out is inconvenient and small, so that there is a problem that the exchange operation becomes complicated and burdensome.

When the nose piece 69 is exchanged after the driving head 70 is removed from the clinching device, the guide post 65 can be broken away from a punch holder 67 by removing a bolt 71 of a bracket 73 by which the locking mechanism 60 is mounted on the punch holder 67 and also removing the lock pin 64 from a groove 66 of the guide post 65 by pulling a cylinder 72 together with the bracket 73 backward, and the nose piece 69 is exchanged after removing it from the separated driving head 70. Therefore, the exchange operation is less complicated as compared with the exchange operation carried out while the driving head 70 is installed to the clinching device. However, there are problems that it takes time to carry out the operation of separating the driving head 70 and also the exchange operation becomes large-scaled.

### SUMMARY OF THE INVENTION

An object of the present invention is to provide an apparatus for continuously driving clinching nuts, in which the problems as described above can be solved, a freedom degree of arrangement of a flexible chute is high, an installation area can be used efficiently, and also a driving head and a punch holder can be separated easily.

The present invention is a clinching device comprising an apparatus for continuously feeding and driving clinching nuts, in which a member to be clinched is punched by a clinching nut and the clinching nut is clinched in a punched hole, comprising:
(a) a driving head;
(b) an arrangement device that delivers the clinching nuts while arranging the clinching nuts so that their orientations are consistent relative to each other and consistent with a driving direction upon delivery to a punching position, which is connected to the driving head by using a flexible chute through which the clinching nuts are passed;
(c) a constant feeding device, by which a restrictedly predetermined number of clinching nuts is caused to be intermittently transported by air through the flexible chute, said constant feeding device being provided at an appropriate location along the flexible chute which extends downwardly from said arrangement device and near said arrangement device;
(d) a clinching nut-charging confirmation device, which has at least one sensor which detects that a predetermined number of clinching nuts is charged in a portion where the sensor is provided, and by a signal from which delivery of said predetermined number of clinching nuts is interrupted; and
(e) a clinching nut-pressurisation device;
characterised in that the flexible chute is connected by a connection device to a waiting chute connected to the driving head, the clinching nut-charging confirmation device being provided at an appropriate location along said waiting chute and near said driving head and the clinching nut-pressurisation device being provided at the rear of said confirmation device along said waiting chute.

The clinching device of claim 2 is the apparatus according to claim 1, wherein the constant feeding device comprises a link rod rotatably mounted about a point substantially in the middle, said link rod being caused to make a see-saw movement by a cylinder, and stopper pins mounted on both ends of the link rod through slotted holes, the stopper pins acting alternately hold a head of a clinching nut and a head of a next clinching nut, whereby a predetermined number of clinching nuts is delivered intermittently, and further comprising an air-injection hole for injecting compressed air obliquely in the forward direction to transport a group of clinching nuts by air, said air-injection hole being located at a base portion of a clinching nut-holding passage of the constant feeding device.

The clinching device of claim 3 is the apparatus according to either of claims 1 or 2 wherein the clinching device comprises a driving head and a punch holder; and a locking mechanism of a guide post mounted on the punch holder comprises a knuckle which is connected to a cylinder rod, a lock pin which is loosely linked by a pin to the knuckle through a slotted hole, a spring by which the lock pin is forced toward the guide post, and a stopper pin which is engaged with the lock pin under force of the spring to control a backward movement of the lock pin.

In clinching device of the present invention, clinching nuts which are arranged so that their orientations are consistent relative to each other and consistent with a driving direction and delivered from an arrangement device to a flexible chute are delivered to a constant feeding device; a predetermined number of clinching nuts are intermittently transported by air to a waiting chute of a clinching device; when it is detected by a charging confirmation device provided at somewhere along the waiting chute that a predetermined number of clinching nuts are fed, delivery of clinching nuts by the constant feeding device is interrupted; and a clinching nut fed to the clinching device by a pressurization device is driven and clinched in a member to be clinched. When a driving head is damaged by driving two clinching nuts, a stopper pin is pushed up against elastic repulsion of a spring by using a tool such as a driver to control release of a lock pin by the stopper pin and also to allow the lock pin loosely linked to a knuckle connected to a cylinder rod through a slotted hole to move backward against elastic repulsion of the spring, whereby engagement with a guide post is released to separate the driving head from a punch holder, and then the damaged driving head is exchanged.

### BRIEF DESCRIPTION OF THE DRAWINGS

Fig. 1 is a front view showing an embodiment of the present invention.

Figs. 2(a) and (b) are partially sectional front views showing an embodiment of the clinching device of the present invention.

Fig. 3 is a partially sectional front view showing an embodiment of the constant feeding device of the present invention.

Fig. 4 is a partially sectional front view showing the constant feeding device of the present invention in a different state.

Fig. 5 is a front view showing an embodiment of the pressurization device of the present invention.

Fig. 6 is a front view showing another embodiment of the constant feeding device of the present invention.

Fig. 7 is a partially sectional front view of a conventional clinching device.

### DESCRIPTION OF THE PREFERRED EMBODIMENTS

In the following, the present invention is described in detail by referring to embodiments shown in the drawings.

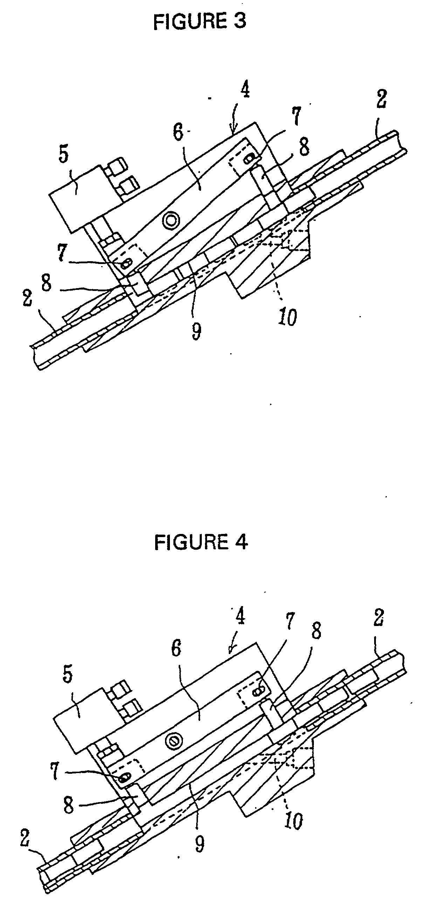

1 is a clinching nut-arrangement device. The arrangement device 1 delivers clinching nuts while arranging the clinching nuts so as to be made postures thereof to be vertically right. 2 is a flexible chute which is arranged substantially in a lateral S-shaped state between the arrangement device 1 and a clinching device 20 described below (the flexible chute 2 is generally made of a polyamide resin containing a plasticizer or the like), and clinching nuts are passed by air through the flexible chute 2 without overturn. 4 is a constant feeding device which is provided at somewhere along the flexible chute 2 extending downward from the arrangement device 1. As shown in Fig. 3 and Fig. 4, the constant feeding device 4 comprises a link rod 6 which is rotatably mounted substantially in the middle and makes a seesaw movement by a cylinder 5, and stopper pins 8 which are mounted on both ends of the link rod 6 through slotted holes 7. The stopper pins 8 alternately hold a head of a clinching nut and a head of a next clinching nut, so that a predetermined number of clinching nuts are delivered intermittently. Further, at a base portion of a clinching nut-holding passage 9 of the constant feeding device 4, i.e., below the last clinching nut to be delivered, there is formed an air-ejection hole 10 for ejecting compressed air toward an oblique and front direction to transport a group of clinching nuts by air.

11 is a connection device by which the flexible chute 2 arranged substantially in a lateral S-shaped state and the clinching device 20 are connected. 12 is a clinching nut-charging confirmation device which is formed between a waiting chute 21 of the clinching device 20 and a connection device 11. The charging confirmation device 12 comprises an emptiness sensor 13 which detects that a predetermined number of clinching nuts are not charged, and a charge sensor 14 which detects that a predetermined number of clinching nuts are charged. When the charge sensor 14 detects charging of clinching nuts, delivery by the constant feeding device 4 is stopped. In the embodiment, by using two sensors, clinching nuts corresponding to delay in a feeding time are charged between the emptiness sensor 13 and the charge sensor 14, but it may be detected by one sensor whether a predetermined number of clinching nuts are charged or not.

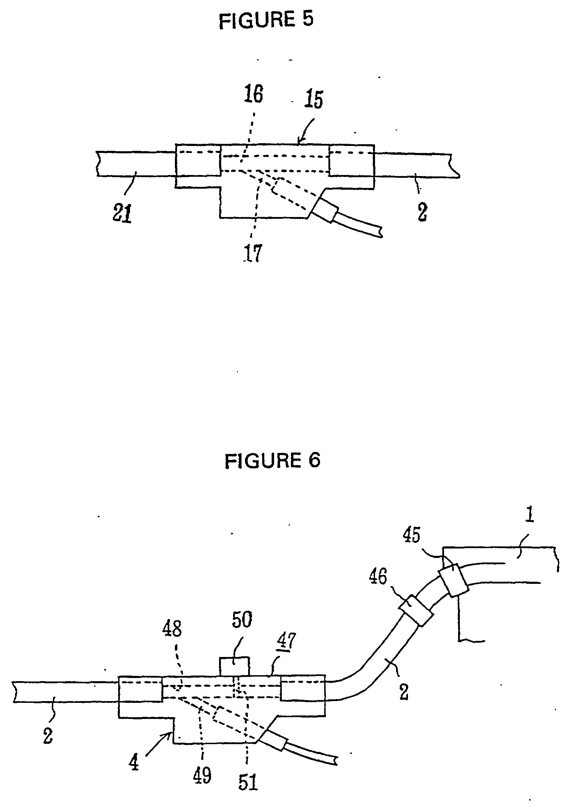

15 is a pressurization device provided in the rear of the clinching nut-charging confirmation device 12 (at a side of the constant feeding device 4). As shown in Fig. 5, in the pressurization device 15, an air-ejection hole 17 which ejects compressed air toward an oblique and front direction is formed at a bottom of a clinching nut passage 16, and by ejecting compressed air from the air-ejection hole 17, clinching nuts in the waiting chute 21 are pressurized and transported forward by air.

20 is a clinching nut-clinching device. The clinching device 20 comprises a punch holder 25 mounted on a press die 24 of a pressing machine 23, and a driving head 27 which is installed to the punch holder 25 through a guide post 26 so that the driving head 27 can move upward and downward. On the punch holder 25, there are mounted a punch 28 which drives a clinching nut and a locking mechanism 29 which is engaged with the guide post 26 holding the driving head 27.

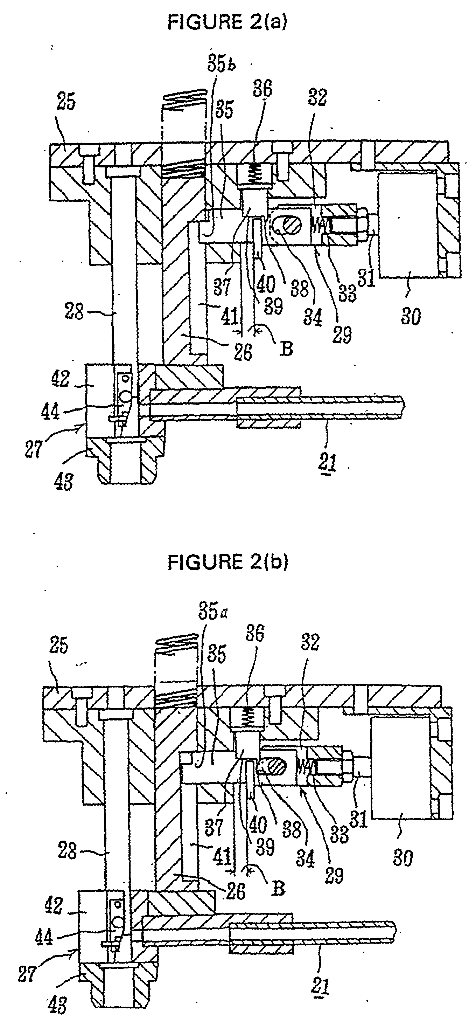

As shown in Fig. 2(a) and Fig. 2(b), the locking mechanism 29 comprises a knuckle 32 connected to a cylinder rod 31 of a cylinder 30, a lock pin 35 which is loosely linked by a pin to the knuckle 32 through a slotted hole 34 under force of a spring 33 so that the lock pin 35 can move backward, a stopper pin 37 by which the lock pin 35 is forced by using a spring 36 so that the lock pin 35 does not move backward at ordinary times. An engagement protrusion 38 of the stopper pin 37 is contacted with a wing 40 extending from both sides of the lock pin 35 so that the tip of the lock pin 35 is not released from a groove 41 of the guide post 26. Further, a clearance B having such a space that an engagement tool such as a driver can be inserted is formed between the punch holder 25 and the wing 40 of the lock pin 35.

The driving head 27 comprises a nose piece 42 which is integrated with the guide post 26, and a nose chip 43 mounted on the nose piece 42. The nose chip 43 is mounted so that the nose chip 43 can be removed from the nose piece 42, whereby damage caused by driving two clinching nuts is made small. On the nose piece 42, there are mounted receiving plates 44 which temporarily supports and releases clinching nuts delivered from the waiting chute 21.

Clinching nuts which are thrown into the arrangement device 1 and arranged so as to be made postures thereof to be vertically right are fed by gravity from the arrangement device 1 to the constant feeding device 4 provided at somewhere along the flexible chute 2 extending downward substantially in a S-shaped state. At this time, the front stopper pin 8 enters into the clinching nut-holding passage 9 by the cylinder 5 to prevent transportation of the clinching nuts delivered from the arrangement device 1, so that the clinching nuts are retained in the clinching nut-holding passage 9 (see Fig. 3). When the clinching nuts are charged into the clinching nut-holding passage 9, the front stopper pin 8 is pulled out from the clinching nut-holding passage 9 and also the back stopper pin 8 is made to enter into the clinching nut-holding passage 9 by reversely actuating the cylinder 5, so that a clinching nut which is the first nut to be delivered among a group of clinching nuts to be delivered next is pressed by the back stopper pin 8, whereby entering of subsequent clinching nuts into the clinching nut-holding passage 9 is prevented (see Fig. 4). By ejecting compressed air from the air-ejection hole 10 in this state, clinching nuts which are not pressed by the back stopper pin 8 and can move freely in the clinching nut-holding passage 9 are delivered forward to the flexible chute 2.

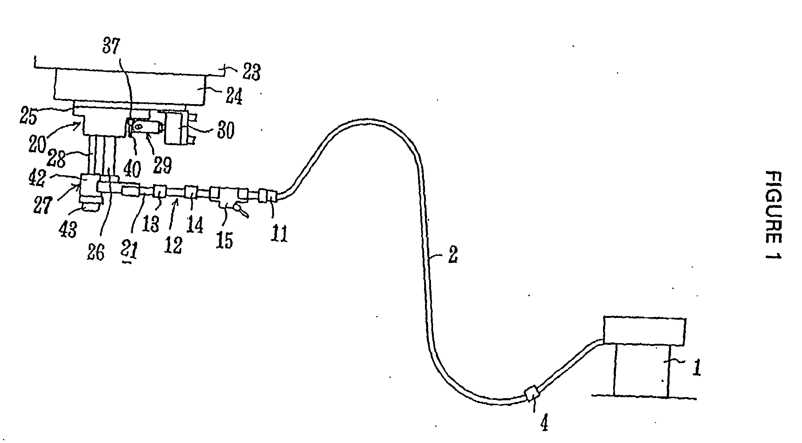

Then, the clinching nuts are delivered to the waiting chute 21 of the clinching device 20 over a pass of the flexible chute 2 formed between portions indicated by the reference numerals 2 and 11 in Fig. 1. The clinching nuts delivered to the waiting chute 21 are stopped by the punch 28 engaged with and inserted into the nose piece 42 of the driving head 27 and successively brought to a state of being arranged in a row and waiting. When the clinching nuts are detected by the charge sensor 14 of the charging confirmation device 12, it is confirmed that a predetermined number of the clinching nuts are charged into the waiting chute 21, so that a signal to stop feeding of clinching nuts is given to the constant feeding device 4.

When the clinching nuts are fed to and charged into the waiting chute 21 as described above and a member to be clinched is positioned at a predetermined place, the lock pin 35 is slightly moved backward by actuating the cylinder 30 of the locking mechanism 29, so that engagement of a large diameter end portion 35a of the lock pin 35 with the groove 41 of the guide post 26 is released, and a small diameter end portion 35b of the lock pin 35 is engaged with said groove 41, whereby the guide post 26 is lowered slightly, i.e., by a difference in diameter between the large diameter end portion 35a and the small diameter end portion 35b (see Fig. 2(a)). By the lowering described above, the punch 28 which blocks a clinching nut-feeding port of the nose piece 42 is relatively elevated to open the clinching nut-feeding port, whereby the clinching nuts are delivered to a punch hole of the nose piece 42 by compressed air ejected from the air-ejection hole 17 of the pressurization device 15. Then, the clinching nuts are temporarily supported by the receiving plates 44 mounted on the punch hole.

Next, the punch holder 25 mounted on the press die 24 is lowered by lowering the pressing machine 23, the nose chip 43 of the driving head 27 which is lowered integrally with the punch holder 25 is contacted with a member to be clinched. By the contact of the nose chip 43 with the member to be clinched, the driving head 27 is relatively elevated by being guided by the guide post 26 (as a result, the large diameter end portion 35a of the lock pin 35 is engaged with the groove 41 of the guide post 26, see Fig. 2(b)). By the elevation described above, the punch 28 presses down the clinching nut temporarily supported by the receiving plates 44 in the punch hole, so that the receiving plates 44 are opened outward. Therefore, the clinching nut is delivered from the nose piece 42, the member to be clinched is punched by the clinching nut, and the clinching nut is clinched in the member to be clinched. After the clinching nut is clinched in the member to be clinched as described above, the pressing machine 23 and the press die 24 are elevated. The same operation as described above is repeated to clinch the clinching nuts in the members to be clinched. When the clinching nuts are consumed and therefore it is detected by the emptiness sensor 13 of the charging confirmation device 12 that the number of the clinching nuts in the waiting chute 21 is less than a predetermined number, a signal to feed clinching nuts is given to the constant feeding device 4 to transport clinching nuts by air.

Further, while the driving operation is carried out as described above, when clinching failure occurs to allow a next clinching nut to be fed although a previous clinching nut remains in the driving head 27 and therefore two clinching nuts are punched by the punch 28, the nose chip 43 of the driving head 27 may be damaged in some cases. When the nose chip 43 is damaged, a tool such as a driver is inserted into the clearance B formed between the wing 40 of the lock pin 35 of the locking mechanism 29 and the punch holder 25, a bearing surface 39 of the stopper pin 37 which controls a backward movement of the lock pin 35 is pushed up by said tool so that the engagement protrusion 38 of the stopper pin 37 does not interfere with the wing 40.

By forcibly pushing the wing 40 backward by the tool while releasing engagement of the lock pin 35 and the stopper pin 37 as described above, the lock pin 35 moves backward into the knuckle 32 through the slotted hole 34 against elastic repulsion of the spring 33, so that engagement with the groove 41 of the guide post 26 is released, whereby the driving head 27 is brought to a state that the driving head 27 can be released from the punch holder 25. Thus, from the nose piece 42 of the driving head 27 removed from the punch holder 25, the damaged nose chip 43 is removed and exchanged with a new nose chip, and then the driving head 27 is installed to the punch holder 25 by carrying out the above operation reversely.

Fig. 6 shows another embodiment of the constant feeding device 4. The constant feeding device 4 comprises a stopper 45 which starts and stops delivery of clinching nuts to the flexible chute 2 extending downward from the arrangement device 1, a counter 46 which counts passing clinching nuts, and a clinching nut-delivering device 47 provided at somewhere along a horizontal flexible chute 2 formed subsequently to the above flexible chute 2 which extends downward. The delivery device 47 comprises an air-ejection hole 49 which ejects compressed air toward an oblique and front direction to a base portion of a clinching nut passage 48, and a shielding plate 51 which is arranged in the rear of the air-ejection hole 49 of the clinching nut passage 48 and closes and opens the clinching nut passage 48 by actuating a cylinder 50. When the number of clinching nuts delivered from the arrangement device 1 is counted and reaches to a predetermined number, delivery is stopped by the stopper 45; the clinching nut passage 48 is closed by actuating the cylinder 50 of the delivery device 47, and also a predetermined number of clinching nuts which waits in the clinching nut passage 48 are fed to the waiting chute 21 of the clinching device 20 by ejecting compressed air from the air-ejection hole 49. By using such a structure, it is possible to make the structure of the constant feeding device 4 of the embodiment simple and cheap.

As clearly understood from the above description, in the present invention, a predetermined number of clinching nuts arranged so as to be made postures thereof to be vertically right are fed to a waiting chute of a clinching device through a flexible chute, and a driving operation is carried out while charge of clinching nuts in the waiting chute is confirmed, so that clinching nuts are not charged entirely in the flexible chute, and therefore a freedom degree of a bending rate when a layout of the flexible chute is made can be heightened. Also, efficiency of delivery is high since a predetermined number of clinching nuts are delivered each time. Further, the bending rate of the flexible chute can be set freely depending on the number of clinching nuts to be delivered at one time, so that optimization of the layout can be effected by changing the bending rate of the flexible chute depending on the number of clinching nuts to be delivered, and also an installation effective area of the apparatus can be heightened. Furthermore, a lock pin is loosely linked to a knuckle of a locking mechanism and removably engaged with a guide post, so that a driving head can be easily separated from a punch holder, and therefore an exchange operation required when a nose chip is damaged can be completed easily and in a short time, whereby various advantages such as increased operation efficiency of the apparatus can be obtained.

Thus, the apparatus for continuously driving clinching nuts of the present invention can solve problems in the prior art and greatly contribute to development of the field concerned.

## Claims

1. A clinching device comprising an apparatus for continuously feeding and driving clinching nuts, in which a member to be clinched is punched by a clinching nut and the clinching nut is clinched in a punched hole, comprising:
(a) a driving head (27);
(b) an arrangement device (1) that delivers the clinching nuts while arranging the clinching nuts so that their orientations are consistent relative to each other and consistent with a driving direction upon delivery to a punching position, which is connected to the driving head (27) by using a flexible chute (2) through which the clinching nuts are passed;
(c) a constant feeding device (4), by which a restrictedly predetermined number of clinching nuts is caused to be intermittently transported by air through the flexible chute (2), said constant feeding device (4) being provided at an appropriate location along the flexible chute (2) which extends downwardly from said arrangement device (1) and near said arrangement device (1);
(d) a clinching nut-charging confirmation device (12), which has at least one sensor (14) which detects that a predetermined number of clinching nuts is charged in a portion where the sensor (14) is provided, and by a signal from which delivery of said predetermined number of clinching nuts is interrupted; and
(e) a clinching nut-pressurisation device (15);
**characterised in that** the flexible chute (2) is connected by a connection device (11) to a waiting chute (21) connected to the driving head (27), the clinching nut-charging confirmation device (12) being provided at an appropriate location along said waiting chute (21) and near said driving head (27) and the clinching nut-pressurisation device (15) being provided at the rear of said confirmation device (12) along said waiting chute (21).

2. A clinching device as claimed in claim 1 wherein the constant feeding device (4) comprises a link rod (6) rotatably mounted about a point substantially in the middle, said link rod being caused to make a see-saw movement by a cylinder (5), and stopper pins (8) mounted on both ends of the link rod (6) through slotted holes (7), the stopper pins (8) acting alternately hold a head of a clinching nut and a head of a next clinching nut, whereby a predetermined number of clinching nuts is delivered intermittently, and further comprising an air-injection hole (10) for injecting compressed air obliquely in the forward direction to transport a group of clinching nuts by air, said air-injection hole (10) being located at a base portion of a clinching nut-holding passage of the constant feeding device (4).

3. The clinching device according to claim 1 or claim 2, wherein the clinching device (20) comprises a driving head (27) and a punch holder (25); and a locking mechanism (29) of a guide post (26) mounted on the punch holder (25) comprises a knuckle (32) which is connected to a cylinder rod (31), a lock pin (35) which is loosely linked by a pin to the knuckle (32) through a slotted hole (34), a spring (33) by which the lock pin (35) is forced toward the guide post (26), and a stopper pin (37) which is engaged with the lock pin (35) under force of the spring (36) to control a backward movement of the lock pin (35).

## Patentansprüche

1. Clinchgerät, welches aus einer Vorrichtung zum kontinuierlichen Fördern und Antreiben von Clinchmuttern besteht, bei welcher ein zu clinchender Körper durch eine Clinchmutter gestanzt wird und die Clinchmutter in einem gestanzten Loch geclincht wird, bestehend aus:
(a) einem Antriebskopf (27);
(b) einem Versorgungsgerät (1), welches die Clinchmutter anliefert, während es die Clinchmuttern so anordnet, daß ihre Ausrichtungen relativ zueinander passend sind und sie mit einer Antriebsrichtung bei der Anlieferung an eine Stanzposition zusammenpassen, die mit dem Antriebskopf (27) verbunden ist wobei eine flexible Rutsche (2) verwendet ist, durch welche hindurch die Clinchmuttern hindurchgeführt werden;
(c) einem konstanten Fördergerät (4), durch welches eine beschränkte vorbestimmte Anzahl von Clinchmuttern für einen intermittierenden Transport durch Luft durch die flexible Rutsche (2) hindurch gebracht wird, wobei das konstante Fördergerät (4) an einem passenden Ort entlang der flexiblen Rutsche (2) vorgesehen ist, die von dem Versorgungsgerät (1) und nahe dem Versorgungsgerät (1) nach unten verläuft;
(d) einem das Beschicken einer Clinchmutter bestätigenden Gerät (12), das wenigstens einen Sensor (14) aufweist, welcher erfaßt, daß eine vorbestimmte Anzahl von Clinchmuttern in einen Bereich beschickt wird, wo der Sensor (14) vorhanden ist, und von welchem durch ein Signal das Beschicken der vorbestimmten Anzahl von Clinchmuttern unterbrochen wird; und
(e) einem Gerät (15) zur Druckbeaufschlagung einer Clinchmutter;
**dadurch gekennzeichnet, daß** die flexible Rutsche (2) durch ein Verbindungsgerät (11) mit einer Warterutsche (21) verbunden ist, die mit dem Antriebskopf (27) verbunden ist, wobei das die Beschickung einer Clinchmutter bestätigende Gerät (12) an einem passenden Ort entlang dieser Warterutsche (21) und nahe bei dem Antriebskopf (27) vorgesehen ist und das Gerät (15) zur Druckbeaufschlagung einer Clinchmutter rückwärts von dem Bestätigungsgerät (12) entlang der Warterutsche (21) vorgesehen ist.

2. Clinchgerät nach Anspruch 1, bei welchem das konstante Fördergerät (4) aus einem Gelenkstab (6) besteht, der um einen Punkt im wesentlichen in der Mitte drehbar montiert ist, wobei der Gelenkstab zur Ausführung einer Schaukelbewegung durch einen Zylinder (5) gebracht wird und Anschlagstifte (8) an den beiden Enden des Gelenkstabes (6) durch Schlitzlöcher (7) hindurch montiert sind, wobei die Anschlagstifte (8) abwechselnd wirksam sind zum Halten eines Kopfes einer Clinchmutter und eines Kopfes einer nächsten Clinchmutter, wodurch eine vorbestimmte Anzahl von Clinchmuttern intermittierend angeliefert wird, und weiterhin bestehend aus einem Luft-Injektionsloch (10) zum Injizieren von Druckluft schräg in der Vorwärtsrichtung für einen Transport einer Gruppe von Clinchmuttern durch Luft, wobei das Luft-Injektionsloch (10) an einem Basisbereich eines Clinchmutter- Haltedurchganges der konstanten Fördervorrichtung (4) angeordnet ist.

3. Clinchgerät nach Anspruch 1 oder Anspruch 2, bei welchem das Clinchgerät (20) aus einem Antriebskopf (27) und einem Stanzhalter (25) besteht; und einem Verriegelungsmechanismus (29) eines Führungsständers (26), der an dem Stanzhalter (25) montiert ist und ein Gelenk (32) aufweist, das mit einer Zylinderstange (31) verbunden ist, einem Sicherungsstift (35), der durch einen Stift mit dem Gelenk (32) durch ein geschlitztes Loch (34) hindurch lose verbunden ist, einer Feder (33), durch welche der Sicherungsstift (35) gegen den Führungsständer (26) gedrückt wird, und einem Anschlagstift (37), der mit dem Sicherungsstift (35) unter der Kraft der Feder (36) im Eingriff gehalten ist, um eine Rückwärtsbewegung des Sicherungsstiftes (35) zu steuern.

## Revendications

1. Dispositif de rivetage comprenant un appareil pour alimenter et mettre en place en continu des écrous rivets, dans lequel un élément à riveter est perforé par un écrou rivet et l'écrou rivet est riveté dans un trou perforé, comprenant :
(a) une tête de mise en place (27) ;
(b) un dispositif de mise en place (1) qui délivre les écrous rivets tout en disposant les écrous rivets de sorte que leurs orientations sont mutuellement cohérentes entre elles et cohérentes avec une direction de mise en place lors de l'alimentation d'une position de perforation, qui est accouplée à la tête de mise en place (27) en utilisant une goulotte flexible (2) à travers laquelle les écrous rivets sont passés ;
(c) un dispositif d'alimentation constante (4) par lequel un nombre prédéterminé, limité, d'écrous rivets est amené à être transporté par intermittence par l'air à travers la goulotte flexible (2), ledit dispositif d'alimentation constante (4) étant disposé en un emplacement approprié le long de la goulotte flexible (2) qui s'étend vers le bas depuis le dispositif de mise en place (1) et près dudit dispositif de mise en place (1) ;
(d) un dispositif de confirmation de chargement d'écrous rivets (12) qui comporte au moins un capteur (14) qui détecte qu'un nombre prédéterminé d'écrous rivets est chargé dans une partie où le capteur (14) est disposé, et par un signal à partir duquel l'alimentation dudit nombre prédéterminé des écrous rivets est interrompue ; et
(e) un dispositif de mise sous pression des écrous rivets (15) ;
**caractérisé en ce que** la goulotte flexible (2) est raccordée par un dispositif de raccordement (11) à une goulotte d'attente (21) raccordée à la tête de mise en place (27), le dispositif de confirmation de chargement d'écrous rivets (12) étant disposé en un emplacement approprié le long de ladite goulotte d'attente (21) et près de ladite tête de mise en place (27), et le dispositif de mise sous pression d'écrous rivets (15) étant disposé à l'arrière dudit dispositif de confirmation (12) le long de ladite goulotte d'attente (21).

2. Dispositif de rivetage selon la revendication 1, dans lequel le dispositif d'alimentation constante (4) comprend une biellette (6) montée en rotation autour d'un point sensiblement au milieu, ladite biellette étant amenée à effectuer un mouvement en dent-de-scie par un cylindre (5), et des broches de butée (8) montées sur les deux extrémités de la biellette (6) à travers des trous en forme de fente (7), les broches de butée (8) agissant alternativement pour maintenir une tête d'un écrou rivet et une tête d'un écrou rivet suivant, avec pour effet qu'un nombre prédéterminé, d'écrous rivets est alimenté par intermittence et comprenant en outre un trou d'injection d'air (10) pour injecter de l'air comprimé à l'oblique dans la direction avant pour transporter un groupe d'écrous rivets à l'aide de l'air, ledit trou d'injection d'air (10) étant placé en une partie de base du passage de maintien d'écrou rivet dudit dispositif d'alimentation constante (4).

3. Dispositif de rivetage selon la revendication 1 ou la revendication 2, dans lequel le dispositif de rivetage (20) comprend une tête de mise en place (27) et un porte-poinçon (25) ; et un mécanisme de verrouillage (29) d'un montant de guidage (26) monté sur le porte-poiçon (25) comprend un joint articulé (32) qui est accouplé à une tige de cylindre (31), une broche de verrouillage (35) qui est accouplée lâchement par une broche au joint articulé (32) à travers un trou en forme de fente (34), un ressort (33) par lequel la broche de verrouillage (35) est forcée vers le montant de guidage (26), et une broche de butée (37) qui est mise en prise avec la broche de verrouillage (35) sous la force du ressort (36) pour contrôler le mouvement vers l'arrière de la broche de verrouillage (35).
